Europäisches Patentamt

European Patent Office

Office européen des brevets

(11) Veröffentlichungsnummer: **0 519 095 A1**

## (12) EUROPÄISCHE PATENTANMELDUNG

(21) Anmeldenummer: **91109917.4**

(22) Anmeldetag: **17.06.91**

(51) Int. Cl.5: **H04N 5/18**

(43) Veröffentlichungstag der Anmeldung:
**23.12.92 Patentblatt 92/52**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Heymann, Roland, Dipl.-Ing.**
**Hirschbergstrasse 31A**
**W-8029 Sauerlach(DE)**

(54) **Klemmschaltung.**

(57) Die Klemmschaltung weist einen zwischen eine Eingangsklemme (1) und eine Ausgangsklemme (2) geschalteten Klemmkondensator (4) auf. Die Ausgangsklemme (2) ist über eine Schalteinrichtung an eine niederohmige Spannungsquelle (6) geschaltet. Eine Einrichtung (7) stellt Einschaltimpulse (8) für die Schalteinrichtung (5) zu Zeitpunkten bereit, zu denen das Videosignal ein Synchronsignal aufweist. Damit wird eine getastete Klemmung erreicht.

Dies ist besonders dann von Vorteil, wenn das Videosignal sich symmetrisch zu seinem Nullpegel ändert (MAC-Signale).

FIG 3

EP 0 519 095 A1

Die Erfindung betrifft eine Klemmschaltung zum Klemmen von Videosignalen.

Die Verarbeitung von Videosignalen erfordert oft definierte Gleichspannungpegel, zwischen denen sich das Videosignal bewegen soll. Dies ist z. B. bei der Analog-Digital-Wandlung der Fall, um dort den Aussteuerbereich der Analog-Digital-Wandler optimal ausnützen zu können.

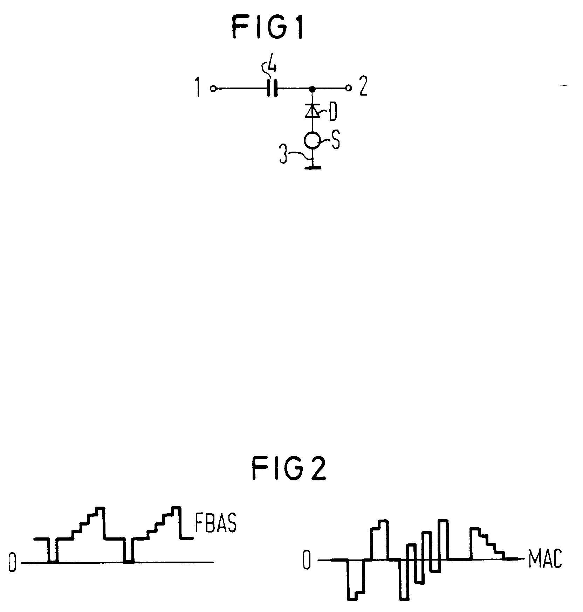

Bisher sind zu diesem Zweck ausschließlich Klemmschaltungen im Einsatz, die das Videosignal unidirektional klemmen, d. h., daß das Videosignal nur bei einer Änderung entweder unter oder über einem vordefinierten Pegel auf diesen geklemmt wird. Eine mögliche bekannte Klemmschaltung zeigt FIG 1, bei der zwischen einem Eingang 1 und einem Ausgang 2 ein Klemmkondensator 4 geschaltet ist. Zusätzlich ist zwischen den Ausgang 2 und einer Bezugspotentialklemme 3 die Serienschaltung einer Diode D mit einer Spannungsquelle S geschaltet. Die Diode D liegt dabei mit ihrem Katodenanschluß am Ausgang 2 und mit ihrem Anodenanschluß an der Spannungsquelle S.

Eine andere Klemmschaltung ist aus dem Buch "Fernseh-Empfangstechnik", 3. Auflage, 1980, von Peter Zastrow, erschienen im Frankfurter Fachverlag, auf den Seiten 198 bis 200 beschrieben. Dort wird eine getastete Klemmschaltung vorgestellt, bei der in Abhängigkeit von in einem Fernsehgerät erzeugten Zeilenrückschlagimpulsen der Klemmkondensator sich auf einen Gleichspannungsanteil auflädt, der zuvor vom Videosignal bei der Signalverarbeitung abgetrennt wurde.

Diesen beiden Klemmschaltungen ist gemeinsam, daß sich das Videosignal nur einseitig zu seinem Nullpegel ändern darf, damit eine einwandfreie Klemmung gewährleistet wird. Als Videosignale können z. B. FBAS(Farb-Bild-Austast-Synchron)-Signale für diese bekannten Klemmschaltungen verwendet werden. Zum besseren Verständnis ist in FIG 2 der Verlauf eines möglichen FBAS-Signales dargestellt, bei dem das Signalminimum zugleich das Synchronsignal festlegt. Verändert sich dagegen das Nutzsignal des Videosignales symmetrisch zu seinem Nullpegel wie dies beispielsweise bei MAC-(Multiplexed-Analog-Components)-Signalen der Fall ist, so kann mit den bekannten Klemmschaltungen kein definierter Gleichspannungspegel mehr erreicht werden.

Es ist aber auch bei diesen sich symmetrisch zum Nullpegel sich verändernden Videosignalen notwendig, unerwünschte langsame Gleichspannungspegeländerungen auszugleichen. Zusätzlich müssen auch niederfrequente Signalanteile, die nicht zum Nutzsignal des Videosignales gehören, entfernt werden können. Dies ist besonders bei den neuen Satellitensignalen der Fall, bei denen zur besseren spektralen Ausnutzung der Transponder dem Videosignal ein niederfrequentes, bei der Signalverarbeitung aber unerwünschtes Dreieckssignal (Energy-Dispersal-Signal) überlagert ist.

Der Erfindung liegt die Aufgabe zugrunde, eine Klemmschaltung anzugeben, bei der sowohl unerwünschte, langsame Gleichspannungspegeländerungen als auch niederfrequente Signalanteile, die nicht zum Nutzsignal des Videosignales gehören, wirksam entfernt werden können, wobei sich das Nutzsignal des Videosignales symmetrisch zu seinem Nullpegel verändern darf. Darüberhinaus soll die Klemmschaltung es zugleich ermöglichen, ein Videosignal, dessen Nutzsignal nur einseitig zu seinem O-Pegel verändert, auf einen vordefinierten Pegel zu klemmen.

Diese Aufgabe wird durch die Merkmale des Anspruches 1 gelöst.

Weiterbildungen der Erfindung sind Gegenstand der Unteransprüche.

Die Erfindung wird im folgenden anhand von weiteren zwei Figuren näher erläutert.
Es zeigen:

FIG 3    ein Blockschaltbild der erfindungsgemäßen Klemmschaltung, und

FIG 4    eine mögliche Schaltungsanordnung der Klemmschaltung von FIG 3.

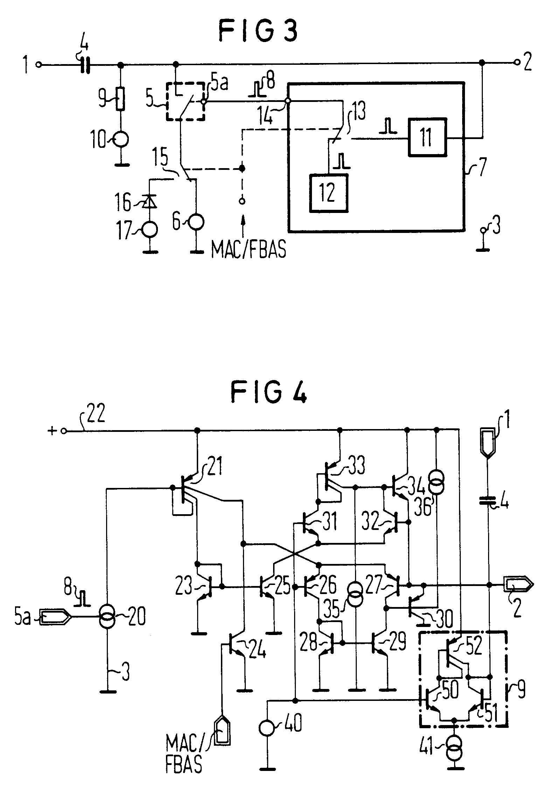

In FIG 3 ist eine erfindungsgemäße Klemmschaltung zum Klemmen von Videosignalen dargestellt. Die Klemmschaltung weist eine Eingangsklemme 1, eine Ausgangsklemme 2, eine Bezugspotentialklemme 3 sowie einen zwischen die Eingangsklemme 1 und Ausgangsklemme 2 geschalteten Klemmkondensator 4 auf. Darüberhinaus verfügt die Klemmschaltung über eine Schalteinrichtung 5 mit einem Steuereingang 5a. Zur Schalteinrichtung 5 liegt eine niederohmige erste Spannungquelle 6 in Reihe. Die Reihenschaltung der Schalteinrichtung 5 und die niederohmige erste Spannungsquelle 6 ist zwischen die Ausgangsklemme 2 und Bezugspotentialklemme 3 geschaltet. Zusätzlich ist eine Einrichtung 7 vorgesehen, um Einschaltimpulse 8 für die Schalteinrichtung 5 bereitzustellen, wobei die Einschaltimpulse 8 zu Zeitpunkten bereitgestellt werden, zu denen das Videosignal an der Eingangsklemme 1 ein Synchronisiersignal aufweist. Die Einschaltimpulse 8 werden an den Steuereingang 5a der Schalteinrichtung 5 angelegt.

Um in der Klemmschaltung im Anlauffall, also zu Beginn des Anlegens eines Videosignals an die Eingangsklemme 1, aber auch im Grenzbereich kleiner oder stark gestörter Videosignale einen definierten Arbeitspunkt zu gewährleisten, sieht die Klemmschaltung von FIG 3 zusätzlich vor, daß zwischen die Ausgangsklemme 2 und Bezugspotentialklemme 3 die Reihenschaltung einer Last 9, z. B. einen Widerstand mit einer zweiten Spannungsquelle 10 geschaltet ist. Die Reihenschaltung dieser zweiten Spannungsquelle 10 mit dem Widerstand 9 dient zur hochohmigen Vorspannungserzeugung für die Klemmschaltung.

Die Einschaltimpulse 8 werden bei der Klemmschaltung von FIG 3 auf unterschiedliche Weise erzeugt, je nach dem ob an der Eingangsklemme 1 Videosignale anliegen, deren Nutzsignal sich nur einseitig zu seinem Nullpegel ändert, wie z. B. FBAS-Signale, oder ob Videosignale an der Eingangsklemme 1 anliegen, deren Nutzsignal sich symmetrisch zum Nullpegel ändert, wie z. B. MAC-Signale.

Liegen FBAS-Signale an der Eingangsklemme 1 an, so werden die Einschaltimpulse 8 aus Synchronimpulsen einer Synchronabtrennstufe 11 in der Einrichtung 7 gewonnen. Die Synchronabtrennstufe 11 dient dazu, aus den Synchronsignalen des Videosignales, hier also dem FBAS-Signal, einen präzisen Tastimpuls zu gewinnen, der die Länge der Ausgleichsimpulse in der Bildaustastlücke des FBAS-Signales nicht überschreiten darf. Die Synchronabtrennstufe 11 kann beispielsweise durch die Reihenschaltung eines Tiefpasses mit einem Amplitudensieb und einem nachgeschalteten nicht nachtriggerbaren Monoflop realisiert sein.

Liegt dagegen ein Videosignal an der Eingangsklemme 1 der Klemmschaltung an, dessen Nutzsignal sich symmetrisch zu seinem Nullpegel ändert, so wird der Einschaltimpuls 8 über eine das Videosignal dekodierende Einrichtung 12 bereitgestellt. Bei MAC-Signalen kann dies z. B. durch einen MAC-Dekoder geschehen, wie dieser beispielsweise in "Stand der D2-MAC-Technik mit konventionellen Meßgeräten und Spezialgeräten", Fernseh- und Kino-Technik, 44. Jahrgang, 1, 1990, auf den Seiten 8 bis 14 beschrieben ist, erfolgen. Soll die Klemmschaltung sowohl zum Klemmen von Videosignalen, deren Nutzsignal sich nur einseitig zu seinem Nullpegel verändert als auch zum Klemmen von Videosignalen, deren Nutzsignal sich symmetrisch zum Nullpegel ändert, einsetzbar sein, so wird erfindungsgemäß in der Einrichtung 7 ein Umschalter 13 vorgesehen, der zwischen den beiden oben beschriebenen Möglichkeiten zum Bereitstellen der Einschaltimpulse 8 umschaltbar ist, wobei an einer Ausgangsklemme 14 des Umschalters 13 die Einschaltimpulse 8 abgreifbar sind.

Es hat sich als zweckmäßig erwiesen, einen zweiten Umschalter 15 vorzusehen, der zwischen der Schalteinrichtung 5 und der ersten Spannungsquelle 6 angeordnet ist. Dieser Umschalter 15 dient einmal dazu, die Schalteinrichtung 5 mit der ersten Spannungsquelle 6 zu verbinden und andererseits dazu, die Schalteinrichtung 5 mit der Serienschaltung einer Diode 16 und einer dritten Spannungsquelle 17 zu verbinden. Die Diode 16 ist dabei so geschaltet, daß ihr Katodenanschluß mit dem zweiten Umschalter 15 verbunden und ihr Anodenanschluß an die dritte Spannungsquelle 17 angeschlossen ist. Es hat sich herausgestellt, daß es günstiger ist, beim Klemmen von FBAS-Signalen den zweiten Umschalter 15 nicht mit der ersten Spannungsquelle 6, sondern mit der Reihenschaltung der Diode 16 und dritten Spannungsquelle 17 zu verbinden. Der erste Umschalter 13 und zweite Umschalter 15 wird von einem Steuersignal MAC/FBAS aktiviert, das anzeigt, ob ein MAC-Signal oder ein FBAS-Signal an der Eingangsklemme 1 der Klemmschaltung anliegt.

Der wesentliche Vorteil einer Klemmschaltung nach FIG 3 besteht darin, daß aus dem an der Eingangsklemme 1 anliegendem Videosignal unerwünschte langsame Gleichspannungs-Pegeländerungen und auch niederfrequente Signalanteile, die nicht zum Nutzsignal des Videosignales gehören, wirksam entfernt werden können. Dies ist besonders günstig bei den neuen Satellitenvideosignalen, denen zur besseren spektralen Ausnutzung der Transponder das eingangs erwähnte niederfrequente, bei der Signalverarbeitung aber unerwünschtes Dreieckssignal, das als energy dispersal signal oder als Verwischungssignal bezeichnet wird, überlagert ist. Dieses Verwischungssignal kann mit der erfindungsgemäßen Schaltungsanordnung wirksam entfernt werden. Damit werden kleine Bildfehler in Form von unerwünschten Helligkeitsänderungen vermieden.

In einer Weiterbildung der Erfindung ist es vorgesehen, die erste Spannungsquelle 6 und dritte Spannungsquelle 17 so aufeinander abzustimmen, daß das geklemmte Videosignal an der Ausgangsklemme 2 einen gleichen Gleichspannungsbereich aufweist.

Eine mögliche Ausführrungsform einer Schaltungsanordnung für eine Klemmschaltung nach FIG 3 ist in FIG 4 dargestellt. Gleiche Bezugszeichen stehen weiterhin für gleiche Teile. Die Schaltungsanordnung weist auf:

- eine nach Maßgabe der Einschaltimpulse 8 schaltbare Stromquelle 20, die mit einem ersten Anschluß mit der Bezugspotentialklemme 3 verbunden ist,
- einen ersten pnp-Multikollektortransistor 21, dessen Emitteranschluß mit einem positiven Potential 22 verbunden ist und dessen erster Kollektoranschluß mit dessen Basisanschluß verbunden ist und an einen anderen Anschluß der schaltbaren Stromquelle 20 geschaltet ist,
- einen ersten npn-Transistor 23, dessen Emitteranschluß mit der Bezugspotentialklemme 3 verbunden ist, dessen Basisanschluß und dessen Kollektoranschluß mit einem zweiten Kollektoranschluß des ersten pnp-Multikollektortransistors 21 in Verbindung steht,
- einem zweiten npn-Transistor 24, dessen Emitteranschluß mit der Bezugspotentialklemme 3 verbunden ist, an dessen Basisanschluß ein Steuersignal anlegbar ist, das die Klemmung für ein FBAS-Signal oder ein MAC-Signal auswählt, und dessen Kollektoranschluß mit einem dritten Kollektoranschluß des ersten pnp-Multikollektortransistors 21 verbunden ist,

- einem dritten npn-Transistor 25, dessen Emitteranschluß mit der Bezugspotentialklemme 3 in Verbindung steht und dessen Basisanschluß mit dem Basisanschluß des ersten npn-Transistors 23 verbunden ist,

- einem ersten pnp-Transistor 26, dessen Emitteranschluß mit dem dritten Kollektoranschluß des ersten pnp-Multikollektortransistors 21 verbunden ist, dessen Basisanschluß über eine Spannungsquelle 40 mit der Bezugspotentialklemme 3 in Verbindung steht,

- einem zweiten pnp-Transistor 27, dessen Emitteranschluß mit dem Emitteranschluß des ersten pnp-Transistors verbunden ist und dessen Kollektoranschluß mit dem Kollektoranschluß des ersten pnp-Transistors 26 über einen Stromspiegel aus npn-Transistoren 28, 29 in Verbindung steht,

- einen vierten npn-Transistor 31, dessen Basisanschluß mit dem Basisanschluß des ersten pnp-Transistors 26 verbunden ist, dessen Emitteranschluß mit dem Kollektoranschluß des dritten npn-Transistors 25 verbunden ist,

- einen fünften npn-Transistor 32, dessen Emitteranschluß mit dem Emitteranschluß des vierten npn-Transistors 31 in Verbindung steht, dessen Basisanschluß mit dem Basisanschluß des zweiten pnp-Transistors 27 verbunden ist und dessen Kollektoranschluß mit dem Kollektoranschluß des vierten npn-Transistors 31 über eine Stromspiegelschaltung 33 in Verbindung steht,

- eine Stromquelle 35, die zwischen den Kollektoranschluß des fünften npn-Transistors 32 und die Bezugspotentialklemme 3 geschaltet ist,

- einen sechsten npn-Transistor 34, dessen Basisanschluß mit dem Kollektoranschluß des fünften npn-Transistors 32 verbunden ist, dessen Emitteranschluß mit dem Basisanschluß des fünften npn-Transistors 32 verbunden ist und dessen Kollektoranschluß an das positive Potential 22 geschaltet ist,

- einen dritten pnp-Transistor 30, dessen Kollektoranschluß mit der Bezugspotentialklemme 3 in Verbindung steht, dessen Basisanschluß mit dem Kollektoranschluß des zweiten pnp-Transistors 27 verbunden ist und dessen Emitteranschluß einerseits mit dem Basisanschluß des zweiten pnp-Transistors 27 und andererseits mit der Ausgangsklemme 2 in Verbindung steht, und

- eine weitere Stromquelle 36, die zwischen das positive Potential 22 und den Basisanschluß des dritten pnp-Transistors 30 geschaltet ist.

Zur Änderung des Klemmpegels kann in einer Weiterbildung der Erfindung die Spannungsquelle 40 zwischen zwei verschiedenen Spannungswerten umgeschaltet werden.

Zur hochohmigen Vorspannungserzeugung verfügt die Schaltungsanordnung von FIG 4 über eine Last 9, die zwischen das positive Potential 22 und eine Stromquelle 41 geschaltet ist. Die Stromquelle 41 ist mit der Bezugspotentialklemme 3 in Verbindung Die Last 9 weist zwei npn-Transistoren 50, 51 auf, deren Emitteranschlüsse mit der Stromquelle 41 in Verbindung steht. Der Basisanschluß des npn-Transistors 50 ist mit dem Basisanschluß des ersten pnp-Transistors 26 und der Basisanschluß des npn-Transistors 51 einerseits mit dessen Kollektoranschluß und andererseits der Ausgangsklemme 2 in Verbindung. Zusätzlich weist die Last 9 einen zweiten pnp-Multikollektortransistor 52 auf, dessen Emitteranschluß an das positive Potential 22 und dessen Basisanschluß mit dem Kollektoranschluß des npn-Transistors 50 verbunden ist. Der erste Kollektoranschluß dieses pnp-Multikollektortransistors 52 ist mit dem Kollektoranschluß des npn-Transistors 50 und der zweite Kollektoranschluß des pnp-Transistors 52 mit der Ausgangsklemme 2 in Verbindung.

**Patentansprüche**

1. Klemmschaltung zum Klemmen von Videosignalen mit:
   - einer Eingangsklemme (1),
   - einer Ausgangsklemme (2),
   - einer Bezugspotentialklemme (3),
   - einem Klemmkondensator (4), der zwischen die Eingangsklemme (1) und Ausgangsklemme (2) geschaltet ist,
   - eine einen Steuereingang (5a) aufweisende Schalteinrichtung (5), die zwischen die Ausgangsklemme (2) und ein mit der Bezugspotentialklemme (3) verbundene niederohmige Spannungsquelle (6) geschaltet ist, und
   - eine Einrichtung (7) zum Bereitstellen von an den Steuereingang (5a) der Schalteinrichtung (5) anzulegenden Einschaltimpulsen (8), wobei die Einschaltimpulse (8) zu Zeitpunkten bereitstellbar sind, zu der das Videosignal ein Synchronsignal aufweist.

2. Klemmschaltung nach Anspruch 1,
   **dadurch gekennzeichnet,**

daß zwischen die Ausgangsklemme (2) und die Bezugspotentialklemme (3) die Reihenschaltung einer Last (9) mit einer Spannungsquelle (10) zur hochohmigen Vorspannungserzeugung vorgesehen ist.

3. Klemmschaltung nach Anspruch 1 oder 2,
**dadurch gekennzeichnet,**
daß die Klemmschaltung zum Klemmen von FBAS-Signalen vorgesehen ist, daß die Einrichtung (7) eine Synchronabtrennstufe (11) aufweist, die an die Ausgangsklemme (2) geschaltet ist und an einer Ausgangsklemme (14) dieser Synchronabtrennstufe (11) die Einschaltimpulse (8) abgreifbar sind.

4. Klemmschaltung nach Anspruch 1 oder 2,
**dadurch gekennzeichnet,**
daß die Klemmschaltung zum Klemmen von MAC-Signalen vorgesehen ist, daß die Einrichtung (7) eine MAC-Decodereinrichtung (12) aufweist, wobei an einer Ausgangsklemme dieser MAC-Decodereinrichtung (12) die Einschaltimpulse (8) abgreifbar sind.

5. Klemmschaltung nach Anspruch 3 und 4,
**dadurch gekennzeichnet,**
daß die Einrichtung (7) eine erste Umschalteinrichtung (13) aufweist, mittels der - je nach dem, ob ein FBAS-Signal oder ein MAC-Signal von der Klemmschaltung geklemmt werden soll - die Einschaltimpulse (8) von der Synchronabtrennstufe (11) oder von der MAC-Decodereinrichtung (12) an den Steuereingang (5a) der Schalteinrichtung (5) anlegbar sind.

6. Klemmschaltung nach Anspruch 5,
**dadurch gekennzeichnet,**
daß eine zweite Umschalteinrichtung (15) vorgesehen ist, durch die nach Maßgabe eines Steuersignales MAC/FBAS entweder die niederohmige Spannungsquelle (6) an die Schalteinrichtung (5) oder die Reihenschaltung einer auf Bezugspotential (3) liegenden dritten Spannungsquelle (17) mit einer Diode (16) schaltbar ist, wobei ein Anodenanschluß dieser Diode (16) mit der dritten Spannungsquelle (17) und ein Katodenanschluß dieser Diode (16) mit der zweiten Umschalteinrichtung (15) verbunden ist.

7. Klemmschaltung nach einem der Ansprüche 1 bis 6,
**dadurch gekennzeichnet,**
daß die Klemmschaltung aufweist:
- eine nach Maßgabe der Einschaltimpulse (8) schaltbare Stromquelle (20), die mit einem ersten Anschluß mit der Bezugspotentialklemme (3) verbunden ist,
- einen ersten pnp-Multikollektortransistor (21), dessen Emitteranschluß mit einem positiven Potential (22) verbunden ist und dessen erster Kollektoranschluß mit dessen Basisanschluß verbunden ist und an einen anderen Anschluß der schaltbaren Stromquelle (20) geschaltet ist,
- einen ersten npn-Transistor (23), dessen Emitteranschluß mit der Bezugspotentialklemme (3) verbunden ist, dessen Basisanschluß und dessen Kollektoranschluß mit einem zweiten Kollektoranschluß des ersten pnp-Multikollektortransistors (21) in Verbindung steht,
- einem zweiten npn-Transistor 24, dessen Emitteranschluß mit der Bezugspotentialklemme (3) verbunden ist, an dessen Basisanschluß ein Steuersignal anlegbar ist, das die Klemmung für ein FBAS-Signal oder ein MAC-Signal auswählt, und dessen Kollektoranschluß mit einem dritten Kollektoranschluß des ersten pnp-Multikollektortransistors (21) verbunden ist,
- einem dritten npn-Transistor 25, dessen Emitteranschluß mit der Bezugspotentialklemme (3) in Verbindung steht und dessen Basisanschluß mit dem Basisanschluß des ersten npn-Transistors (23) verbunden ist,
- einem ersten pnp-Transistor (26), dessen Emitteranschluß mit dem dritten Kollektoranschluß des ersten pnp-Multikollektortransistors (21) verbunden ist, dessen Basisanschluß über eine Spannungsquelle (40) mit der Bezugspotentialklemme (3) in Verbindung steht,
- einem zweiten pnp-Transistor (27), dessen Emitteranschluß mit dem Emitteranschluß des ersten pnp-Transistors verbunden ist und dessen Kollektoranschluß mit dem Kollektoranschluß des ersten pnp-Transistors (26) über einen Stromspiegel aus npn-Transistoren (28, 29) in Verbindung steht,
- einen vierten npn-Transistor (31), dessen Basisanschluß mit dem Basisanschluß des ersten pnp-Transistors (26) verbunden ist, dessen Emitteranschluß mit dem Kollektoranschluß des dritten npn-Transistors (25) verbunden ist,
- einen fünften npn-Transistor (32), dessen Emitteranschluß mit dem Emitteranschluß des vierten npn-Transistors (31) in Verbindung steht, dessen Basisanschluß mit dem Basisanschluß des zweiten pnp-Transistors (27) verbunden ist und dessen Kollektoranschluß mit dem Kollektoranschluß des vierten npn-Transistors (31) über eine stromspiegelschaltung (33) in Verbindung steht,

- eine Stromquelle (35), die zwischen den Kollektoranschluß des fünften npn-Transistors (32) und die Bezugspotentialklemme (3) geschaltet ist,

- einen sechsten npn-Transistor (34), dessen Basisanschluß mit dem Kollektoranschluß des fünften npn-Transistors (32) verbunden ist, dessen Emitteranschluß mit dem Basisanschluß des fünften npn-Transistors (32) verbunden ist und dessen Kollektoranschluß an das positive Potential (22) geschaltet ist,

- einen dritten pnp-Transistor (30), dessen Kollektoranschluß mit der Bezugspotentialklemme (3) in Verbindung steht, dessen Basisanschluß mit dem Kollektoranschluß des zweiten pnp-Transistors (27) verbunden ist und dessen Emitteranschluß einerseits mit dem Basisanschluß des zweiten pnp-Transistors (27) und andererseits mit der Ausgangsklemme (2) in Verbindung steht, und

- eine weitere Stromquelle (36), die zwischen das positive Potential (22) und den Basisanschluß des dritten pnp-Transistors (30) geschaltet ist.

# FIG 1

# FIG 2

# FIG 3

# FIG 4

Europäisches
Patentamt

**EUROPÄISCHER RECHERCHENBERICHT**

Nummer der Anmeldung

EP    91 10 9917

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PATENT ABSTRACTS OF JAPAN vol. 11, no. 312 (E-548)(2759) 12. Oktober 1987 & JP-A-62 104 382 ( NEC CORP ) 14. Mai 1987 * Zusammenfassung * | 1 | H04N5/18 |
| A | | 2-3 | |
| A | PATENT ABSTRACTS OF JAPAN vol. 12, no. 184 (E-614)(3031) 28. Mai 1988 & JP-A-62 289 058 ( MATSUSHITA ) 15. Dezember 1987 * Zusammenfassung * | 1-3 | |
| A | PATENT ABSTRACTS OF JAPAN vol. 9, no. 99 (E-311)(1822) 27. April 1985 & JP-A-59 225 678 ( NIPPON VICTOR K.K. ) 18. Dezember 1984 * Zusammenfassung * | 1-3 | |
| A | GB-A-2 238 695 (PHILIPS) * Seite 3, Zeile 13 - Seite 4, Zeile 30; Abbildung * | 1,4 | **RECHERCHIERTE SACHGEBIETE (Int. Cl.5 )** H04N |

Der vorliegende Recherchenbericht wurde für alle Patentansprüche erstellt

| Recherchenort | Abschlußdatum der Recherche | Prüfer |
|---|---|---|
| DEN HAAG | 17 FEBRUAR 1992 | SCHINNERL A. |

EPO FORM 1503 03.82 (P0403)